# FASCICULE DE BREVET EUROPEEN

(11) **EP 1 755 306 B1**
(45) Date de publication et mention de la délivrance du brevet: **02.04.2008**
(21) Numéro de dépôt: 05300672.2
(22) Date de dépôt: 17.08.2005
(51) Int. Cl.: H04L 29/08, H04L 12/58, G06F 17/28, H04L 29/06

(54) **Dispositif et procédé d'activation/désactivation à distance de services pour des terminaux de communication, via un réseau IP**
Vorrichtung und Verfahren zur Fernaktivierung/-deaktivierung von Diensten für Kommunikationsendgeräte über ein IP Netzwerk
Apparatus and process for remotely activating/deactivating services for communication terminals via an IP network

(43) Date de publication de la demande: 21.02.2007
(73) Titulaire: Alcatel Lucent, 75008 Paris (FR)
(72) Inventeur: Litteaut, Jacques, 78160, MARLY LE ROI (FR); Coulon, Stéphane, 95810, ARRONVILLE (FR)
(74) Mandataire: Sciaux, Edmond

(56) Documents cités:
- EP-A- 1 549 036
- US-A1- 2003 233 424
- US-B1- 6 885 898
- PATENT ABSTRACTS OF JAPAN vol. 2003, no. 06, 3 juin 2003 (2003-06-03) & JP 2003 046657 A (VICTOR CO OF JAPAN LTD), 14 février 2003 (2003-02-14)

## Description

L'invention concerne les réseaux de communication, et plus précisément l'activation/désactivation de service(s) pour des terminaux de communication couplés à des réseaux de communication à protocole Internet (ou IP).

Comme le sait l'homme de l'art, de nombreux réseaux de communication de types différents sont couplés les uns aux autres, mais en raison de leurs types différents et/ou du fait qu'ils appartiennent à des opérateurs différents, ils n'offrent pas tous des services identiques ou équivalents. En outre, seules les applications de communication conçues par un même éditeur de logiciel et/ou satisfaisant à un même protocole standardisé sont généralement compatibles entre elles. Par ailleurs, lorsqu'un service est standardisé, il nécessite généralement des perfectionnements protocolaires, ce qui prend du temps et ne permet son utilisation effective qu'une fois que tous les fabricants d'équipements de réseau et/ou tous les opérateurs de réseau ont intégré ces perfectionnements protocolaires. Il est donc souhaitable de pouvoir activer ou désactiver un ou plusieurs services sur un terminal distant.

Le document US 2003/0233424 décrit un procédé d'activation/désactivation à distance de fonctions d'un appareil électroménager, et permettant de prendre connaissance de certaines informations décrivant l'état de cet appareil électroménager. Il utilise une messagerie instantanée classique. Par exemple, cet appareil est un climatiseur.

Cet appareil est équipé d'un terminal de communication, couplé à Internet, capable de recevoir/émettre des messages instantanés, et couplé à une unité de commande des fonctions de l'appareil. Un utilisateur distant, équipé par exemple d'un poste téléphonique mobile, utilise un service de messagerie instantanée pour envoyer des ordre à l'appareil, et recevoir en retour des informations sur son état.

Le document JP2003046657 décrit un procédé d'activation/désactivation à distance de fonctions d'un appareil domestique audio/vidéo, via Internet. L'utilisateur distant utilise un ordinateur personnel pour envoyer des commandes via un service de messagerie instantanée classique.

Le document EP 1 549 036 décrit un procédé d'activation/désactivation à distance de fonctions photographiques d'un poste téléphonique mobile, en utilisant une messagerie instantanée classique. L'utilisateur distant utilise un autre poste téléphonique mobile, pour envoyer des commandes via un service de messagerie instantanée classique, basé sur le protocole WAP.

Le document US 6.885.898 décrit un procédé d'activation/désactivation à distance de fonctions d'un appareil industriel ou d'un jouet, et permettant de prendre connaissance de certaines informations décrivant l'état de cet appareil ou de ce jouet. L'utilisateur distant utilise un ordinateur personnel, ou un téléphone mobile, par exemple, pour envoyer des commandes via un service de messagerie instantanée classique, sur un réseau local ou l'internet.

Ces procédés connus consistent notamment à comparer une phrase, d'un message reçu, via une messagerie instantanée, par un terminal de télécommunication associé à l'appareil qui est à commander, avec des phrases prédéterminées et mémorisées, pour reconnaître quelle est la fonction à activer/désactiver.

II peut arriver que la phrase reçue ne soit pas reconnue, ou seulement partiellement reconnue, parce que l'utilisateur a oublié la phrase qui doit être utilisée, ou bien l'a mal tapée sur son clavier. Alors la commande échoue et l'utilisateur ne sait pas quoi faire pour y remédier.

Le but de la présente invention est de proposer une solution à ce problème.

L'invention est définie par le procédé d'activation/désactivation à distance de service pour des terminaux de communication couplés à un réseau de communication à protocole internet selon la revendication indépendante 1.

Le procédé selon l'invention peut comporter d'autres caractéristiques qui peuvent être prises séparément ou en combinaison, et notamment :
- on peut procéder dans chaque dispositif d'activation/désactivation à la conversion d'une requête contenue dans un message provenant du terminal demandeur associé lorsque cette requête est au moins partiellement dans un langage différent du langage choisi :

- on peut procéder dans chaque dispositif d'activation/désactivation à la conversion d'une requête en déterminant sa syntaxe et la sémantique des mots qu'elle comporte, puis en convertissant certains au moins desdits mots dans le langage choisi ;
- lorsqu'un dispositif d'activation/désactivation, associé à un terminal destinataire, reçoit un message, on peut procéder à l'analyse syntaxique et sémantique de la requête qu'il contient afin de déterminer chaque service choisi défini dans cette requête ;
- le langage choisi peut être, par exemple, un langage naturel.

L'invention propose également un dispositif d'activation/désactivation à distance de service(s) pour des terminaux de communication couplés à un réseau de communication à protocole Internet selon la revendication indépendante 7.

Le dispositif selon l'invention peut comporter d'autres caractéristiques qui peuvent être prises séparément ou en combinaison, et notamment :
- ses moyens de gestion peuvent être chargés de convertir une requête, contenue dans un message à transmettre et provenant de leur terminal associé, lorsque cette requête est au moins partiellement dans un langage différent du langage choisi ;
- ses moyens de gestion peuvent comporter des moyens d'analyse syntaxique et sémantique chargés, chaque fois qu'une requête doit être convertie, de déterminer la syntaxe de cette requête et la sémantique des mots qu'elle comporte, puis de convertir certains au moins de ces mots dans le langage choisi ;
- ses moyens de gestion peuvent comporter des moyens d'analyse syntaxique et sémantique chargés, lorsqu'ils reçoivent un message contenant une requête, d'effectuer une analyse syntaxique et sémantique de cette requête afin de déterminer chaque service choisi qui s'y trouve défini ;
- les moyens d'analyse syntaxique et sémantique peuvent être également chargés, lorsqu'ils reçoivent un message d'interrogation requérant des informations complémentaires, d'analyser son contenu afin de déterminer les informations complémentaires demandées. Dans ce cas, les moyens de gestion sont chargés de générer, à destination du dispositif d'activation/désactivation qui est associé à un terminal destinataire, un message de réponse comportant les informations complémentaires déterminées ;
- ses moyens de gestion peuvent être chargés, lorsqu'ils reçoivent un message de réponse, de stocker les informations complémentaires qu'il contient dans leurs moyens d'analyse syntaxique et sémantique.

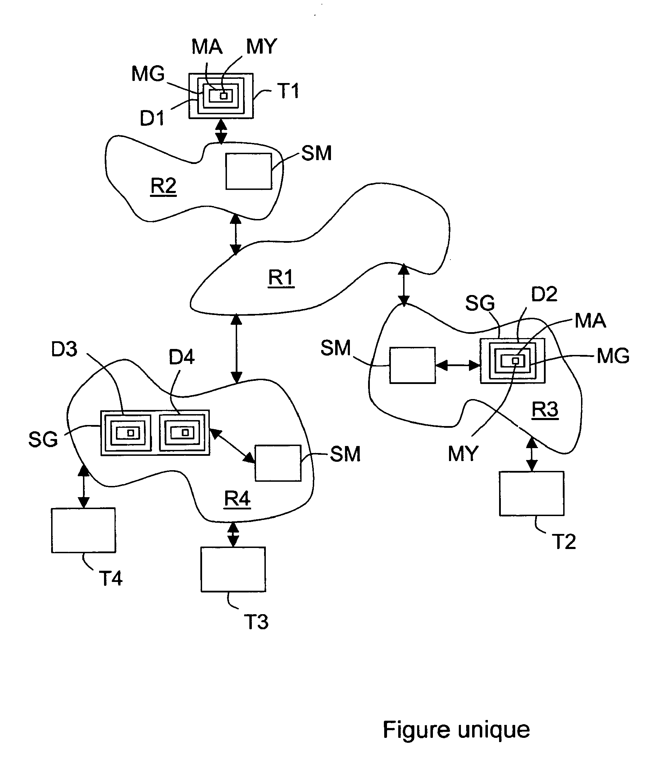

D'autres caractéristiques et avantages de l'invention apparaîtront à l'examen de la description détaillée ci-après, et du dessin annexé, sur lequel l'unique figure illustre de façon très schématique un groupe de réseaux de communication couplés les uns aux autres, comprenant, pour certains, des exemples de réalisation de dispositif d'activation/désactivation selon l'invention, et auxquels sont raccordés des terminaux de communication, dont l'un d'entre eux comporte un exemple de réalisation d'un dispositif d'activation/ désactivation selon l'invention.

Le dessin annexé pourra non seulement servir à compléter l'invention, mais aussi contribuer à sa définition, le cas échéant.

L'invention a pour objet de permettre l'activation/désactivation à distance de service(s) pour des terminaux de communication couplés à un réseau de communication à protocole Internet (ou IP).

On entend ici par « terminal couplé à un réseau IP » un terminal raccordé à un réseau de communication comportant un coeur de réseau IP ou couplé à un coeur de réseau IP.

Par ailleurs, on entend ici par « terminal de communication » tout terminal de communication, fixe ou mobile, capable d'échanger des données sous la forme de signaux, avec un autre terminal de communication, via leur(s) réseau(x) de rattachement respectifs. Il pourra donc s'agir, par exemple, de téléphones fixes ou mobiles, d'ordinateurs fixes ou portables, ou d'assistants personnels numériques (ou PDA), équipés d'un module de communication, éventuellement de type IP.

Dans l'exemple non limitatif illustré sur l'unique figure, un premier terminal (de communication) T1 est couplé à un réseau Internet (IP) R1 via le réseau R2 de son fournisseur d'accès à Internet, un deuxième terminal (de communication) T2 est couplé au réseau Internet R1 via le réseau privé R3 de son opérateur mobile, et des troisième T3 et quatrième T4 terminaux (de communication) sont couplés au réseau Internet R1 via le réseau privé R4 de l'entreprise à laquelle ils appartiennent. Bien entendu, de nombreuses variantes de connexion entre réseaux peuvent être envisagées.

Les réseaux R2 à R4 peuvent être de tout type, et notamment de type radio cellulaire (ou mobile), de type fixe commuté (plus connu sous les acronymes anglais POTS (pour « Plain Old Telephone Service ») et PSTN (pour « Public Switched Telephony Network»)), de type local filaire (plus connu sous l'acronyme anglais LAN (pour « Local Area Network »)), ou de type local sans fil (plus connu sous l'acronyme anglais WLAN (pour « Wireless LAN »), par exemple de type WiFi)).

Par exemple, le réseau R2 est un réseau fixe commuté permettant l'accès à l'Internet via une ligne XDSL, le réseau R3 est un réseau radio mobile (ou cellulaire) et le réseau R4 est un réseau local filaire de type LAN.

Afin que l'invention puisse être mise en oeuvre, chaque réseau R2 à R4 doit être équipé d'un serveur de messagerie instantanée (ou « instant messaging », ou encore « chat service ») SM, comme par exemple un serveur de type IRC (pour « Internet Relay Chat »). Il est rappelé qu'un serveur de messagerie instantanée SM permet aux terminaux Ti (ici i = 1 à 4), qui sont couplés à son réseau et dont les utilisateurs sont abonnés au service de messagerie instantanée qu'il gère, d'échanger des messages instantanés, via Internet (R1), avec d'autres terminaux couplés à d'autres réseaux disposant également d'un serveur de messagerie instantanée et dont les utilisateurs sont abonnés au service de messagerie instantanée géré par ce serveur.

Afin de permettre à certains terminaux Ti, abonnés à un service de messagerie instantanée, d'activer/désactiver à distance des services auxquels ils ont accès lorsqu'ils sont raccordés à leur propre réseau de rattachement (par exemple R2 pour T1 ou R4 pour T3 et T4), l'invention propose de leur associer un dispositif d'activation/désactivation Di. Comme cela est illustré sur l'unique figure, un dispositif d'activation/désactivation Di, associé à un terminal Ti, peut être soit implanté dans ce terminal (c'est ici le cas de D1 dans le terminal T1), soit implanté dans un serveur de gestion SG du réseau de rattachement de ce terminal (c'est ici le cas de D2 associé au terminal T2 et implanté dans le réseau R3 et de D3 et D4 respectivement associés aux terminaux T3 et T4 et implantés dans le réseau R4).

Chaque dispositif d'activation/désactivation Di comprend un module de gestion MG associé à un terminal Ti et couplé, directement ou indirectement, au serveur de messagerie instantanée SM du réseau auquel est couplé (éventuellement momentanément) le terminal associé Ti.

Ce module de gestion MG est chargé, chaque fois qu'il reçoit du terminal associé Ti un message à transmettre vers au moins un terminal destinataire Ti' (i',i) et comportant une requête d'activation/désactivation d'au moins un service choisi, de gérer la transmission de ce message, par le serveur de messagerie instantanée SM auquel il est couplé (et donc sous la forme d'un message instantané), vers le dispositif d'activation/désactivation Di' associé à chaque terminal destinataire Ti'.

Lorsque le message à transmettre, reçu par un dispositif d'activation/désactivation Di, contient une requête qui est d'origine dans un langage choisi, comme par exemple un langage naturel, le module de gestion MG du dispositif d'activation/désactivation Di, transmet le message reçu au serveur de messagerie instantanée SM auquel il est couplé afin qu'il intègre sa requête dans un message instantané et qu'il transmette ce message instantané vers chaque dispositif d'activation/désactivation Di' associé à un terminal destinataire Ti'.

En revanche, lorsque le message à transmettre, reçu par un dispositif d'activation/désactivation Di, contient une requête qui n'est pas d'origine dans un langage choisi, le module de gestion MG du dispositif d'activation/désactivation Di doit tout d'abord le convertir dans ce langage choisi. Puis, le module de gestion MG transmet un message, contenant la requête convertie, au serveur de messagerie instantanée SM auquel il est couplé afin qu'il intègre cette requête convertie dans un message instantané et qu'il transmette ce message instantané vers chaque dispositif d'activation/désactivation Di' associé à un terminal destinataire Ti'.

Chaque requête contenue dans un message à transmettre est initialement constituée par l'utilisateur du terminal demandeur Ti au moyen de l'interface homme/machine dudit terminal Ti. Ce message est ensuite transmis par le terminal demandeur Ti au dispositif d'activation/désactivation Di qui lui est associé. Quel que soit le réseau auquel est rattaché le terminal demandeur Ti (éventuellement momentanément dans le cas d'une situation dite de « roaming » dans un réseau visité), le dispositif d'activation/désactivation Di qui lui est associé est joignable (y compris lorsqu'il est implanté dans le serveur de messagerie de son réseau d'appartenance (ou « home network »)).

Un utilisateur peut par exemple décider de transmettre, au moyen de son terminal Ti et à au moins un terminal Ti', un message contenant une requête d'activation/désactivation de service(s), pour tout type de raison, et par exemple du fait qu'il n'a pas réussi à joindre son utilisateur par téléphone, ou bien du fait qu'il a oublié d'activer ou de désactiver le transfert d'appel de son terminal fixe Ti' vers son terminal mobile Ti.

Par exemple, lorsque l'utilisateur A d'un terminal T1, par exemple un téléphone fixe raccordé au réseau R2, n'a pas réussi à joindre l'utilisateur B d'un terminal T2, par exemple un autre téléphone fixe T4 raccordé au réseau R4, il génère un message de type « rappeler A » ou « rappelez moi ».

Si maintenant l'utilisateur A dispose d'un premier terminal T3, par exemple un téléphone fixe raccordé au réseau R4, et d'un second terminal T2, par exemple un téléphone mobile raccordé au réseau R3, et qu'il a oublié d'activer le transfert d'appel de son terminal fixe T3 vers son terminal mobile T2, il génère un message de type « transférer mon téléphone de bureau vers mon téléphone mobile ».

Lorsque l'utilisateur connaît le langage choisi compréhensible par les modules de gestion MG des dispositifs d'activation/désactivation Di, il peut directement constituer sa requête dans le langage naturel. Dans ce cas, le module de gestion MG du dispositif d'activation/désactivation Di auquel est associé son terminal Ti contrôle la syntaxe et la sémantique de la requête reçue au moyen d'un module d'analyse MA, et si cette requête est correcte en termes de syntaxe et de sémantique, il transmet le message contenant la requête au serveur de messagerie instantanée SM, en vue de sa transmission.

Si l'utilisateur ne connaît pas du tout, ou pas très bien, le langage choisi compréhensible par les modules de gestion MG des dispositifs d'activation/désactivation Di, il constitue sa requête avec la syntaxe et les mots de sa langue, ou bien partiellement avec la syntaxe et/ou la sémantique du langage choisi. Dans ce cas, lorsque le module de gestion MG, du dispositif d'activation/désactivation Di auquel est associé son terminal Ti, contrôle la syntaxe et la sémantique de la requête reçue au moyen de son module d'analyse MA, il détecte chaque erreur de syntaxe et/ou de sémantique par rapport au langage choisi. II doit alors convertir la requête reçue afin qu'elle satisfasse à la syntaxe et à la sémantique du langage choisi.

Le module d'analyse MA dispose préférentiellement d'une mémoire MY dans laquelle sont stockées, d'une part, des règles de syntaxe, et d'autre part, des mots dans un premier langage (celui de l'utilisateur), par exemple représentatifs de noms d'utilisateurs, de commandes de service, ou de services, en correspondance de leur traduction dans le langage choisi et/ou d'un identifiant de communication. Ainsi, lorsque le module d'analyse MA détecte une erreur de syntaxe ou de sémantique par rapport au langage choisi, il accède à sa mémoire MY afin de déterminer comment cette erreur peut être corrigée (ou convertie). Il peut ainsi progressivement convertir la requête reçue.

Préférentiellement, la mémoire MY peut être enrichie par apprentissage grâce aux informations de conversion que son dispositif d'activation/désactivation Di peut obtenir auprès des autres dispositifs d'activation/désactivation Di', comme on le verra plus loin.

Une fois que le module de gestion MG, du dispositif d'activation/désactivation Di auquel est associé son terminal demandeur Ti, a converti une requête, il l'intègre dans un message qu'il transmet au serveur de messagerie instantanée SM auquel il est couplé, en vue de sa transmission vers chaque dispositif d'activation/désactivation Di' associé à un terminal destinataire Ti'.

Le module de gestion MG est également chargé, chaque fois qu'il reçoit un message en provenance d'un dispositif d'activation/désactivation Di associé à un terminal demandeur Ti, d'effectuer une analyse de la requête contenue dans ce message reçu afin de déterminer chaque service choisi qui s'y trouve défini. Puis, selon la requête, il active, ou bien désactive, chaque service qu'il a déterminé afin que le terminal destinataire associé Ti' puisse bénéficier, ou bien cesse de bénéficier, de celui-ci.

Comme dans le cas de la transmission, lorsque le module de gestion MG reçoit un tel message, il effectue une analyse sémantique et syntaxique de la requête qu'il contient au moyen de son module d'analyse MA. Pour ce faire, il accède (lorsqu'il en contient une) à sa mémoire MY, afin de déterminer la signification des mots contenus dans le requête, compte tenu de sa syntaxe.

Les contenus des mémoires MY des différents dispositifs d'activation/désactivation Di n'étant pas tous obligatoirement identiques, il peut arriver que certains mots, constituant une requête dans le langage choisi, ne soient pas connus d'un module d'analyse MA. La requête étant alors au moins partiellement incompréhensible, le dispositif d'activation/désactivation Di ne peut pas y satisfaire.

Pour remédier à cet inconvénient, chaque module de gestion MG, d'un dispositif d'activation/désactivation Di' associé à un terminal destinataire Ti', peut être agencé de manière à générer, à destination du dispositif d'activation/désactivation Di qui lui a transmis le message contenant une requête au moins en partie incompréhensible, un message d'interrogation requérant des informations complémentaires à propos de l'une au moins des parties incompréhensibles.

Par exemple, le dispositif d'activation/désactivation Di' associé à un terminal destinataire Ti' peut recevoir un message contenant une requête de type « rappeler A ». Si A n'est pas un nom stocké dans la mémoire MY de son module d'analyse MA, alors le module de gestion MG génère à destination du dispositif d'activation/désactivation Di qui lui a transmis la requête un message d'interrogation de type « qui est A » ou « quel est le numéro de téléphone de A » ou encore « quels sont les nom et numéro de téléphone de A ».

Le dispositif d'activation/désactivation Di' associé à un terminal destinataire Ti' peut également recevoir un message contenant une requête de type « transférer mon téléphone de bureau vers mon téléphone mobile ». Si le mot « transférer » n'est pas stocké dans la mémoire MY de son module d'analyse MA, alors le module de gestion MG génère à destination du dispositif d'activation/désactivation Di qui lui a transmis la requête un message d'interrogation de type « que signifie transférer » ou bien « quel est le numéro de téléphone du terminal mobile » ou encore « que signifie transférer et quel est le numéro de téléphone du terminal mobile ».

Lorsqu'un dispositif d'activation/désactivation Di reçoit un message d'interrogation, son module de gestion MG le communique à son module d'analyse MA afin qu'il analyse son contenu sur les plans sémantique et syntaxique et détermine l'objet de ce message d'interrogation. Pour ce faire, il accède à sa mémoire MY pour comprendre le contenu du message d'interrogation en recherchant les mots qu'il contient, puis pour rechercher les informations complémentaires demandées.

Par exemple, si le message d'interrogation est de type « que signifie transférer », les informations complémentaires sont de type « transférer = ICFW » (pour « Immediate Call ForWarding »).

Si le message d'interrogation est de type « quel est le numéro de téléphone de A », les informations complémentaires sont de type « téléphone A=01 xx xx xx xx ».

Une fois que le module d'analyse MA a déterminé les informations complémentaires demandées, le module de gestion MG génère un message de réponse comportant les informations complémentaires déterminées, à destination du dispositif d'activation/désactivation Di' qui lui a transmis le message d'interrogation.

Lorsqu'un dispositif d'activation/désactivation Di' reçoit un message de réponse, consécutivement à l'envoi d'un message d'interrogation, son module de gestion MG le communique à son module d'analyse MA afin qu'il analyse son contenu (informations complémentaires) sur les plans sémantique et syntaxique et achève de déterminer chaque service choisi défini dans la requête initialement reçue grâce aux informations complémentaires contenues dans le message de réponse.

On entend ici par « déterminer un service choisi » le fait de déterminer une commande associée à un service. Par exemple, en présence d'une requête de type « rappeler A » émanant du dispositif D1 et destinée au dispositif D4 associé au téléphone fixe T4, le service choisi est le service d'affichage de message et la commande consiste à activer l'affichage de message pour que le téléphone destinataire T4 puisse afficher le message « rappeler A » sur son écran. Lorsque l'utilisateur B du téléphone T4 va se servir de ce dernier, le message « rappeler A » va alors s'afficher sur son écran.

En présence d'une requête de type « transférer mon téléphone de bureau vers mon téléphone mobile » émanant du dispositif D2 (associé au téléphone mobile T2) et destinée au dispositif D3 associé au téléphone de bureau (fixe) T3, le service choisi est le service de transfert d'appel et la commande consiste à activer le transfert d'appel du téléphone de bureau T3 vers le téléphone mobile T2 (associé à D2).

En présence d'une requête de type « cesser le transfert » émanant du dispositif D2 (associé au téléphone mobile T2) et destinée au dispositif D3 associé au téléphone de bureau (fixe) T3, le service choisi est le service de transfert d'appel et la commande consiste à désactiver le transfert d'appel du téléphone de bureau T3 vers le téléphone mobile T2 (associé à D2).

Grâce au mécanisme d'échange de messages d'interrogation et de messages de réponse entre dispositifs d'activation/désactivation Di et Di', les mémoires MY de leurs modules d'analyse MA peuvent être enrichies, par apprentissage. A cet effet, il est donc avantageux, lorsqu'un module d'analyse MA reçoit une nouvelle définition de mot ou de commande, ou un nouveau numéro de téléphone, d'un dispositif d'activation/désactivation Di différent du sien Di', qu'il sauvegarde cette nouvelle définition ou ce nouveau numéro dans sa mémoire MY, afin de pouvoir l'interpréter immédiatement s'il le rencontre de nouveau lors d'une analyse ultérieure.

Cette solution d'apprentissage est avantageuse car elle évite d'avoir à mettre à jour systématiquement, et par exemple périodiquement, toutes les mémoires MY, ce qui serait coûteux en termes de temps et de bande passante.

Le dispositif d'activation/désactivation D selon l'invention, et notamment son module de gestion MG, peut être réalisé sous la forme de circuits électroniques, de modules logiciels (ou informatiques), ou d'une combinaison de circuits et de logiciels.

On a décrit ci-avant des dispositifs d'activation/désactivation D permettant de mettre en oeuvre l'invention. Mais, cette invention peut être également considérée sous la forme d'un procédé d'activation/désactivation de service(s). Celui-ci peut être mis en oeuvre à l'aide des dispositifs d'activation/désactivation D présentés ci-avant. Les fonctions et sous-fonctions principales et optionnelles assurées par les étapes de ce procédé étant sensiblement identiques à celles assurées par les différents moyens constituant les dispositifs, seules seront résumées ci-après les étapes mettant en oeuvre les fonctions principales du procédé selon l'invention.

Ce procédé consiste:
- à associer à certains au moins des terminaux Ti un dispositif d'activation/désactivation Di couplé à un service de messagerie instantanée (ou « instant messaging », ou encore « chat service ») SM,
- à transmettre, d'un terminal demandeur Ti vers le dispositif d'activation/ désactivation Di qui lui est associé, un message comportant une requête d'activation/désactivation d'au moins un service choisi et destiné à au moins un autre terminal Ti', afin qu'il gère la transmission de ce message, sous la forme d'un message instantané, vers le dispositif d'activation/désactivation Di' de chaque terminal destinataire Ti', après une éventuelle conversion de sa requête dans un langage choisi, et
- à effectuer dans chaque dispositif d'activation/désactivation Di' associé à un terminal destinataire Ti' une analyse de la requête qui est contenue dans le message transmis, afin de déterminer chaque service choisi, défini dans cette requête, puis d'activer ou de désactiver chaque service déterminé afin que le terminal destinataire associé Ti' puisse ou cesse de bénéficier de celui-ci.

L'invention offre plusieurs avantages, parmi lesquels :
- chaque usager peut posséder son propre méta réseau constitué de l'ensemble de ses contacts,
- chaque entreprise peut créer son propre méta réseau qui constitue un sur-ensemble de son réseau d'entreprise et qui comprend des réseaux d'employés mobiles, de clients, de fournisseurs, et d'usagers Internet, intégrés à son propre réseau. A cet effet, l'entreprise peut utiliser des serveurs qui lui fournissent des informations nécessaires à la localisation, et à la présence de tous ses contacts et employés,
- de nouvelles applications n'appartenant pas à des terminaux mais à des serveurs de tout type peuvent être créées. Ces nouvelles applications peuvent effectuer, par exemple au moyen d'un compte propre de messagerie instantanée, des services de diffusion de messages ou de mise à jour de postes client (activation de nouveaux services, mise à jour de dictionnaire(s) ou vocabulaire(s), service de réveil, par exemple), aussi bien pour les usagers d'un méta réseau personnel que pour le réseau de clients d'une entreprise.

L'invention ne se limite pas aux modes de réalisation de dispositif d'activation/désactivation et de procédé d'activation/désactivation décrits ci-avant, seulement à titre d'exemple, mais elle englobe toutes les variantes que pourra envisager l'homme de l'art dans le cadre des revendications ci-après.

## Revendications

1. Procédé d'activation/désactivation à distance de services pour des terminaux de communication (Ti) couplés à un réseau de communication à protocole Internet (R1), consistant :
i) à associer à certains au moins des terminaux (Ti) un dispositif d'activation/désactivation (Di) couplé à un service de messagerie instantanée (SM),
ii) à transmettre d'un terminal (Ti), dit demandeur, vers le dispositif d'activation/désactivation (Di) associé un message comportant une requête, d'activation/désactivation d'au moins un service choisi, afin qu'il gère la transmission de ce message, sous la forme d'un message instantané, vers le dispositif d'activation/ désactivation (Di') de chaque terminal destinataire (Ti'), après une éventuelle conversion de sa requête dans un langage choisi,
et iii) à effectuer dans chaque dispositif d'activation/désactivation (Di') associé à un terminal destinataire (Ti') une analyse de la requête contenue dans ledit message transmis afin de déterminer chaque service choisi défini dans ladite requête puis activer ou désactiver chaque service déterminé afin que ledit terminal destinataire associé (Ti') puisse ou cesse de bénéficier de celui-ci ;
**caractérisé en ce qu'**en cas d'indétermination d'une partie au moins d'un service requis,
i) ledit dispositif d'activation/désactivation (Di') associé à un terminal destinataire (Ti') génère un message d'interrogation requérant des informations complémentaires à propos de l'une au moins desdites parties indéterminées, à destination du dispositif d'activation/désactivation (Di) associé au terminal demandeur (Ti),
ii) puis à réception dudit message d'interrogation, ledit dispositif d'activation/ désactivation (Di) associé au terminal demandeur (Ti) analyse le contenu dudit message afin de déterminer lesdites informations complémentaires demandées, et génère à destination du dispositif d'activation/désactivation (Di') associé audit terminal destinataire (Ti') un message de réponse comportant lesdites informations complémentaires,
et iii) à réception dudit message de réponse, ledit dispositif d'activation/désactivation (Di') associé au terminal destinataire (Ti') analyse le contenu dudit message de réponse afin d'achever de déterminer chaque service choisi défini dans la requête initialement reçue.

2. Procédé selon la revendication 1, **caractérisé en ce que** l'on procède dans un dispositif d'activation/désactivation (Di) à la conversion d'une requête contenue dans un message provenant du terminal associé (Ti) lorsque cette requête est au moins partiellement dans un langage différent dudit langage choisi.

3. Procédé selon la revendication 2, **caractérisé en ce que** l'on procède dans un dispositif d'activation/désactivation (Di) à la conversion d'une requête en déterminant la syntaxe de ladite requête et la sémantique des mots qu'elle comporte, puis en convertissant certains au moins desdits mots dans ledit langage choisi.

4. Procédé selon la revendication 1, **caractérisé en ce qu'**à réception d'un message dans un dispositif d'activation/désactivation (Di') associé à un terminal destinataire (Ti'), on procède à l'analyse syntaxique et sémantique de la requête contenue dans ledit message reçu, de manière à déterminer chaque service choisi défini dans cette requête.

5. Procédé selon la revendication 4, **caractérisé en ce qu'**à réception dudit message de réponse ledit dispositif d'activation/désadivation (Di') associé au terminal destinataire (Ti') stocke lesdites informations complémentaires.

6. Procédé selon l'une des revendications 1 à 5, **caractérisé en ce que** ledit langage est un langage naturel.

7. Dispositif d'activation/désactivation à distance de services pour des terminaux de communication (Ti) couplés à un réseau de communication à protocole Internet (R1), qui comprend des moyens de gestion (MG) propres à être associés à un terminal (Ti) et propos à être couplés à un serveur de messagerie instantanée (SM), et agencés pour :
i) en cas de réception, en provenance de leur terminal associé (Ti), d'un message à transmettre vers au moins un terminal dit destinataire (Ti') et comportant une requête d'activation/ désactivation d'au moins un service choisi, gérer la transmission de ce message, sous la forme d'un message instantané, vers le dispositif d'activation/ désactivation (Di') de chaque terminal destinataire (Ti'), après une éventuelle conversion de sa requête dans un langage choisi,
et ii) en cas de réception d'un message provenant d'un dispositif d'activation/désactivation (Di) associé à un autre terminal, dit demandeur (Ti), effectuer une analyse de la requête contenue dans ce message reçu afin de déterminer chaque service choisi défini dans ladite requête puis d'activer ou de désactiver chaque service déterminé afin que ledit terminal destinataire associé (Ti') puisse ou cesse de bénéficier de celui-ci ;
**caractérisé en ce que** lesdits moyens de gestion (MG) sont agencés, en cas d'indétermination d'une partie au moins d'un service requis, pour générer à destination du dispositif d'activation/désactivation (Di) associé au terminal demandeur (Ti) un message d'interrogation requérant des informations complémentaires à propos de l'une au moins desdites parties indéterminées,
et **en ce que** lesdits moyens de gestion (MG) sont agencés pour, en cas de réception d'un message de réponse comportant lesdites informations complémentaires demandées, analyser le contenu dudit message de réponse afin d'achever de déterminer chaque service choisi défini dans la requête initialement reçue.

8. Dispositif selon la revendication 7, **caractérisé en ce que** lesdits moyens de gestion (MG) sont agencés pour convertir une requête, contenue dans un message à transmettre et provenant du terminal associé (Ti), lorsque cette requête est au moins partiellement dans un langage différent dudit langage choisi.

9. Dispositif selon la revendication 8, **caractérisé en ce que** lesdits moyens de gestion (MG) comportent des moyens d'analyse syntaxique et sémantique (MA) agencés, en cas de besoin de conversion d'une requête, pour déterminer la syntaxe de cette requête et la sémantique des mots qu'elle comporte, puis pour convertir certains au moins desdits mots dans ledit langage choisi.

10. Dispositif selon la revendication 7, **caractérisé en ce que** lesdits moyens de gestion (MG) comportent des moyens d'analyse syntaxique et sémantique (MA) agencés, en cas de réception d'un message contenant une requête, pour effectuer une analyse syntaxique et sémantique de ladite requête de manière à déterminer chaque service choisi défini dans cette requête.

11. Dispositif selon la revendication 10, **caractérisé en ce que** lesdits moyens d'analyse syntaxique et sémantique (MA) sont agencés, en cas de réception d'un message d'interrogation requérant des informations complémentaires, pour analyser son contenu afin de déterminer lesdites informations complémentaires demandées, et **en ce que** lesdits moyens de gestion (MG) sont agencés pour générer, à destination du dispositif d'activation/désactivation (Di') associé à un terminal destinataire (Ti'), un message de réponse comportant lesdites informations complémentaires déterminées.

12. Dispositif selon l'une des revendications 10 ou 11, **caractérisé en ce que** lesdits moyens de gestion (MG) sont agencés, à réception d'un message de réponse, pour stocker lesdites informations complémentaires dans leurs moyens d'analyse syntaxique et sémantique (MA).

## Claims

1. Method of remotely activating/deactivating services for use by communication terminals (Ti) coupled to an Internet Protocol communication network (R1), said method consisting in:
i) associating with at least some of the terminals (Ti) an activation/deactivation device (Di) coupled to an instant messaging service (SM),
ii) sending from a requesting terminal (Ti) to the associated activation/deactivation device (Di) a message including a request to activate/deactivate at least one selected service in order for it to manage the sending of said message, in the form of an instant message, to the activation/deactivation device (Di') of each destination terminal (Ti'), where applicable after converting its request into a selected language, and
iii) in each activation/deactivation device (Di') associated with a destination terminal (Ti'), analysing the request contained in said message sent in order to determine each selected service defined in said request and then activating or deactivating each service that has been determined in order for said associated destination terminal (Ti') to benefit therefrom or to cease to benefit therefrom,
**characterised in that**, if at least a portion of a required service cannot be determined:
i) said activation/deactivation device (Di') associated with a destination terminal (Ti') generates an enquiry message requesting additional information in respect of at least one of said portions that have not been determined to the activation/deactivation device (Di) associated with the requesting terminal (Ti),
ii) on receiving said enquiry message, said activation/deactivation device (Di) associated with the requesting terminal (Ti) analyses the content of said message in order to determine said requested additional information and generates a response message sent to the activation/deactivation device (Di') associated with said destination terminal (Ti') and including said additional information, and
iii) on receiving said response message, said activation/deactivation device (Di') associated with the destination terminal (Ti') analyses the content of said response message in order to complete the determination of each selected service defined in the request initially received.

2. Method according to claim 1, **characterised in that** an activation/deactivation device (Di) converts a request contained in a message coming from the associated terminal (Ti) if said request is at least partially in a language different from said selected language.

3. Method according to claim 2, **characterised in that** an activation/deactivation device (Di) converts a request by determining the syntax of said request and the semantics of the words that it includes and then converting at least some of said words into said selected language.

4. Method according to claim 1, **characterised in that** on receiving a message in an activation/deactivation device (Di') associated with a destination terminal (Ti'), the syntax and the semantics of the request contained in said received message are analysed to determine each selected service defined in said request.

5. Method according to claim 4, **characterised in that** on receiving said response message said activation/deactivation device (Di') associated with the destination terminal (Ti') stores said additional information.

6. Method according to any of claims 1 to 5, **characterised in that** said language is natural language.

7. Device for remotely activating/deactivating services for use in communication terminals (Ti) coupled to an Internet Protocol communication network (R1) that includes management means (MG) adapted to be associated with a terminal (Ti) and adapted to be coupled to an instant messaging (SM) server, which management means are adapted:
i) on receiving from the associated terminal (Ti) a message to be sent to at least one destination terminal (Ti') and including a request to activate/deactivate at least one selected service, to manage the sending of that message, in the form of an instant message, to the activation/deactivation device (Di') of each destination terminal (Ti'), where applicable after converting its request into a selected language, and
ii) on receiving a message from an activation/deactivation device (Di) associated with another requesting terminal (Ti), to analyse the request contained in said received message in order to determine each selected service defined in said request and then to activate or to deactivate each service so determined in order for said associated destination terminal (Ti') to benefit therefrom or to cease to benefit therefrom,
**characterised in that** said management means (MG) are adapted, if at least a portion of a requested service has not been determined, to generate an enquiry message sent to the activation/deactivation device (Di) associated with the requesting terminal (Ti) to request additional information in respect of at least one of said parts that has not been determined,
and **in that** said management means (MG) are adapted, on receiving a response message including said requested additional information, to analyse the content of said response message in order to complete the determination of each selected service defined in the request initially received.

8. Device according to claim 7, **characterised in that** said management means (MG) are adapted to convert a request contained in a message to be sent and coming from the associated terminal (Ti) if said request is at least partially in a language other than said selected language.

9. Device according to claim 8, **characterised in that** said management means (MG) include syntax and semantics analyser means (MA) adapted, if it is necessary to convert a request, to determine the syntax of said request and the semantics of the words that it includes, and then to convert at least some of said words into said selected language.

10. Device according to claim 7, **characterised in that** said management means (MG) include syntax and semantics analyser means (MA) adapted, on receiving a message containing a request, to analyse the syntax and the semantics of said request to determine each selected service defined in said request.

11. Device according to claim 10, **characterised in that** said syntax and semantics analyser means (MA) are adapted, on receiving an enquiry message requesting additional information, to analyse its content in order to determine said requested additional information, and **in that** said management means (MG) are adapted to generate a response message sent to the activation/deactivation device (Di') associated with a destination terminal (Ti') including said additional information that has been determined.

12. Device according to claim 10 or 11, **characterised in that** said management means (MG) are adapted, on receiving a response message, to store said additional information in their syntax and semantics analyser means (MA).

## Patentansprüche

1. Verfahren zur Fernaktivierung/-deaktivierung von Diensten für Kommunikationsendgeräte (Ti), die mit einem Kommunikationsnetzwerk mit Internet-Protokoll (R1) verbunden sind, das Folgendes umfasst:
i) Zuordnung einer Vorrichtung zur Aktivierung/Deaktivierung (Di), die mit einem Instant Messaging-Dienst (SM) verbunden ist, zumindest zu bestimmten Endgeräten (Ti),
ii) Übermittlung einer Meldung von einem so genannten anfordernden Endgerät (Ti) an die zugeordnete Vorrichtung zur Aktivierung/Deaktivierung (Di), die eine Anforderung zur Aktivierung/Deaktivierung mindestens eines gewählten Dienstes enthält, damit sie die Übermittlung dieser Meldung in Form einer Instant Message an die Vorrichtung zur Aktivierung/Deaktivierung (Di') jedes Empfänger-Endgeräts (Ti') steuern kann, und zwar nach der eventuellen Konvertierung ihrer Anforderung in eine gewählte Sprache,
und iii) Durchführung einer Analyse der in der genannten übermittelten Meldung enthaltenen Anforderung in jeder einem Empfänger-Endgerät (Ti') zugeordneten Vorrichtung zur Aktivierung/Deaktivierung (Di'), um jeden gewählten Dienst zu ermitteln, der in der genannten Anforderung definiert ist, und anschließend jeden ermittelten Dienst zu aktivieren oder deaktivieren, damit das genannte zugeordnete Empfänger-Endgerät (Ti') diesen Dienst nutzen bzw. nicht mehr nutzen kann;
**dadurch gekennzeichnet, dass** in dem Fall, in dem zumindest ein Teil eines angeforderten Dienstes nicht ermittelt werden kann,
i) die genannte, einem Empfänger-Endgerät (Ti') zugeordnete Vorrichtung zur Aktivierung/Deaktivierung (Di') eine Abfragemeldung, in der zusätzliche Informationen über zumindest einen der nicht ermittelten Teile angefordert werden, an die Vorrichtung zur Aktivierung/Deaktivierung (Di), die dem anfordernden Endgerät (Ti) zugeordnet ist, erstellt;
ii) die dem anfordernden Endgerät (Ti) zugeordnete Vorrichtung zur Aktivierung/Deaktivierung (Di) beim Empfang der genannten Abfragemeldung den Inhalt der genannten Meldung anschließend analysiert, um die genannten angeforderten zusätzlichen Informationen zu ermitteln und eine Antwortmeldung für die Vorrichtung zur Aktivierung/Deaktivierung (Di') zu erstellen, die dem genannten Empfänger-Endgerät (Ti') zugeordnet ist, die die genannten zusätzlichen Informationen enthält;
und iii) die genannte Vorrichtung zur Aktivierung/Deaktivierung (Di'), die dem Empfänger-Endgerät (Ti') zugeordnet ist, den Inhalt der genannten Antwortmeldung beim Empfang der genannten Antwortmeldung analysiert, um jeden in der ursprünglich empfangenen Meldung definierten gewählten Dienst ermitteln zu können.

2. Verfahren gemäß Anspruch 1, **dadurch gekennzeichnet, dass** in einer Vorrichtung zur Aktivierung/Deaktivierung (Di) eine Konvertierung einer in einer Meldung von dem zugeordneten Endgerät (Ti) enthaltenen Anforderung vorgenommen wird, wenn diese Anforderung zumindest teilweise in einer anderen Sprache vorliegt als der gewählten Sprache.

3. Verfahren gemäß Anspruch 2, **dadurch gekennzeichnet, dass** in einer Vorrichtung zur Aktivierung/Deaktivierung (Di) eine Konvertierung einer Anforderung vorgenommen wird, indem die Syntax der genannten Anforderung und die Semantik der Worte, die sie beinhaltet, ermittelt werden und anschließend zumindest einige der genannten Worte in die genannte gewählte Sprache konvertiert werden.

4. Verfahren gemäß Anspruch 1, **dadurch gekennzeichnet, dass** beim Empfang einer Meldung in einer Vorrichtung zur Aktivierung/Deaktivierung (Di'), die einem Empfänger-Endgerät (Ti') zugeordnet ist, eine Analyse von Syntax und Semantik der in der genannten empfangenen Meldung enthaltenen Anforderung vorgenommen wird, um jeden gewählten Dienst zu ermitteln, der in dieser Anforderung definiert ist.

5. Verfahren gemäß Anspruch 4, **dadurch gekennzeichnet, dass** die genannte Vorrichtung zur Aktivierung/Deaktivierung (Di'), die dem Empfänger-Endgerät (Ti') zugeordnet ist, die genannten zusätzlichen Informationen beim Empfang der genannten Antwortmeldung speichert.

6. Verfahren gemäß einem der Ansprüche 1 bis 5, **dadurch gekennzeichnet, dass** es sich bei der genannten Sprache um eine natürliche Sprache handelt.

7. Vorrichtung zur Fernaktivierung/-deaktivierung von Diensten für Kommunikationsendgeräte (Ti), die mit einem Kommunikationsnetzwerk mit Internet-Protokoll (R1) verbunden sind, die Verwaltungseinrichtungen (MG) umfasst, die einem Endgerät (Ti) zugeordnet und mit einem Instant Messaging-Server (SM) verbunden werden können und entsprechend ausgeführt sind, um:
i) beim Empfang einer Meldung von ihrem zugeordneten Endgerät (Ti), die an mindestens ein so genanntes Empfänger-Endgerät (Ti') weitergeleitet werden soll und eine Anforderung zur Aktivierung/Deaktivierung mindestens eines gewählten Dienstes enthält, die Übermittlung dieser Meldung in Form einer Instant Message an die Vorrichtung zur Aktivierung/Deaktivierung (Di') jedes Empfänger-Endgeräts (Ti') zu steuern, und zwar nach einer eventuellen Konvertierung der Anforderung in eine gewählte Sprache;
und ii) beim Empfang einer Meldung von einer Vorrichtung zur Aktivierung/Deaktivierung (Di), die einem anderen so genannten anfordernden Endgerät (Ti) zugeordnet ist, die in dieser empfangenen Meldung enthaltene Anforderung zu analysieren, um jeden gewählten Dienst, der in der genannten Anforderung definiert ist, zu ermitteln, und anschließend jeden ermittelten Dienst zu aktivieren oder zu deaktivieren, damit das genannte zugeordnete Empfänger-Endgerät (Ti') diesen nutzen bzw. nicht mehr nutzen kann;
**dadurch gekennzeichnet, dass** die genannten Verwaltungseinrichtungen (MG) entsprechend ausgeführt sind, um für den Fall, in dem zumindest ein Teil eines angeforderten Dienstes nicht ermittelt werden kann, eine Abfragemeldung an die Vorrichtung zur Aktivierung/Deaktivierung (Di), die dem anfordernden Endgerät (Ti) zugeordnet ist, zu erstellen, in der zusätzliche Informationen in Bezug auf mindestens einen der nicht ermittelten Teile angefordert werden,
sowie **dadurch**, dass die genannten Verwaltungseinrichtungen (MG) entsprechend ausgeführt sind, um im Fall des Empfangs einer Antwortmeldung, die die genannten angeforderten zusätzlichen Informationen enthält, den Inhalt der genannten Antwortmeldung zu analysieren, um jeden gewählten Dienst ermitteln zu können, der in der ursprünglich empfangenen Anforderung definiert ist.

8. Vorrichtung gemäß Anspruch 7, **dadurch gekennzeichnet, dass** die genannten Verwaltungseinrichtungen (MG) entsprechend ausgeführt sind, um eine Anforderung zu konvertieren, die in einer zu übertragenden Meldung enthalten ist, die von dem zugeordneten Endgerät (Ti) stammt, wenn diese Anfrage zumindest teilweise in einer anderen Sprache vorliegt als der genannten gewählten Sprache.

9. Vorrichtung gemäß Anspruch 8, **dadurch gekennzeichnet, dass** die genannten Verwaltungseinrichtungen (MG) Einrichtungen zur Analyse von Syntax und Semantik (MA) umfassen, falls eine Anforderung konvertiert werden muss, um die Syntax dieser Anforderung sowie die Semantik der darin enthaltenen Worte zu ermitteln und anschließend zumindest einige der genannten Worte in die genannte gewählte Sprache zu konvertieren.

10. Vorrichtung gemäß Anspruch 7, **dadurch gekennzeichnet, dass** die genannten Verwaltungseinrichtungen (MG) Einrichtungen zur Analyse von Syntax und Semantik (MA) umfassen, die entsprechend ausgeführt sind, um beim Empfang einer Meldung, die eine Anforderung beinhaltet, eine Analyse von Syntax und Semantik der genannten Anforderung durchzuführen, um jeden gewählten Dienst zu ermitteln, der in dieser Anforderung definiert ist.

11. Vorrichtung gemäß Anspruch 10, **dadurch gekennzeichnet, dass** die genannten Einrichtungen zur Analyse von Syntax und Semantik (MA) entsprechend ausgeführt sind, um beim Empfang einer Abfragemeldung, in der zusätzliche Informationen angefordert werden, ihren Inhalt zu analysieren, um die genannten angeforderten zusätzlichen Informationen zu ermitteln, sowie **dadurch**, dass die genannten Verwaltungseinrichtungen (MG) entsprechend ausgeführt sind, um an die Vorrichtung zur Aktivierung/Deaktivierung (Di'), die einem Empfänger-Endgerät (Ti') zugeordnet ist, eine Antwortmeldung zu erstellen, die die genannten zusätzlichen ermittelten Informationen enthält.

12. Vorrichtung gemäß einem der Ansprüche 10 oder 11, **dadurch gekennzeichnet, dass** die genannten Verwaltungseinrichtungen (MG) entsprechend ausgeführt sind, um die genannten zusätzlichen Informationen beim Empfang einer Antwortmeldung in ihren Einrichtungen zur Analyse von Syntax und Semantik (MA) zu speichern.
